# EUROPEAN PATENT SPECIFICATION

(11) **EP 0 570 061 B1**
(45) Date of publication and mention of the grant of the patent: **06.03.1996**
(21) Application number: 93201302.2
(22) Date of filing: 04.05.1993
(51) Int. Cl.: G01M 17/00, G01M 13/02

(54) **Method and device for testing the locking of an axle differential and its nearest interaxle differential or switch box of a multiaxle drive motor vehicle.**
Verfahren und Vorrichtung zum Testen des Sperrens eines Ach- sendifferentials und seines nächsten Zwischenachsendifferen- tials oder Verteilergetriebes eines mehrachsig angetriebenen Motorfahrzeuges
Procédé et dispositif d'essai de l'engagement d'un engrenage différentiel d'essieu et l'engrenage différentiel entre essieux le plus proche ou la boîte de transfert la plus proche d'un véhicule à plusieurs axes motorisés

(30) Priority: 08.05.1992 NL 9200824
(43) Date of publication of application: 18.11.1993
(73) Proprietor: Sun Electric Systems B.V., NL-1382 LG Weesp (NL)
(72) Inventor: Lammers, Jan Willem, NL-1381 CD Weesp (NL)
(74) Representative: Timmers, Cornelis Herman Johannes

(56) References cited:
- BROWN BOVERI REVIEW vol. 73, no. 2, February 1986, BADEN CH pages 94 - 100 H.W. WEYLAND 'MODERN TEST RIGS FOR THE VEHICLE INDUSTRY'
- brochure Sun brake-analyser series SBA 1920

## Description

The invention relates to a method for testing the locking of an axle differential and its nearest interaxle differential or switch box of a multi-axle drive motor vehicle, and to a device for carrying out said method.

Motor vehicles with several driven axles have an axle differential in each of said axles, while there is also an interaxle differential which takes care of the distribution of the driving force over the axles concerned. These differentials can be locked, in particular for use in rough terrain.

When the locking of an axle differential is switched on, one wheel will turn along with the other wheel when the latter is rotatably driven. This means that the locking of an axle differential can be tested on a simple roller test bench with a driven pair of rollers. However, if the locking of the axle differential and the locking of the interaxle differential are switched on simultaneously - which is currently often the case in modern multi-axle drive vehicles - such a test can no longer be carried out on a simple roller test bench, - such as the SUN Brake Analyzer Series SBA 1920 because the second pair of wheels, coupled by means of the interaxle differential to the first pair of wheels, is then resting on the ground. Testing the locking of interaxle and axle differential is then possible only if a roller bench with two pairs of rollers disposed at the correct distance apart is available, but this is seldom the case, particularly at garages.

The object of the invention is to provide a method by means of which the proper functioning of both interaxle and axle differential can be tested using a simple roller test bench with one pair of rollers. According to the invention, this method is characterised in that the pair of wheels of one of the driven axles is made to rest on the two independently rotating rollers of a pair of rollers of a roller test bench, the wheels of the other axle are made to rest on the ground, a limited driving couple is exerted by means of one of the rollers of the pair of rollers on the wheel supported by said roller, the reaction of this and the opposite wheel in response thereto with the locking switched on and/or off is observed, and the functioning of the respective locks is deduced from the result of this observation.

The following criteria are preferably applied in this case:
driven wheel does not rotate: interaxle and axle differential locked;
driven wheel rotates, but the opposite wheel does not: neither of the differentials locked;
driven wheel rotates and opposite wheel rotates along with it in the same direction: axle differential locked, but interaxle differential not locked;
driven wheel rotates and opposite wheel rotates in opposite direction: axle differential not locked, and interaxle differential locked.

The couple exerted is preferably adjusted as desired.

The invention also provides a roller test bench for carrying out the above-described method, provided with a pair of independently rotating rollers which is characterised in that one of the rollers of said pair of rollers can be driven in such a way that, even if the wheel supported by it cannot rotate continously, a limited driving couple is exerted on said wheel.

Preferred embodiments of this roller test bench are described in claims 5 to 10.

The invention is explained with reference to the drawing, in which:
Figure 1 is a diagrammatic top view of a tractor chassis with three driven axles placed on a roller test bench;
Figure 2 is a side view thereof.

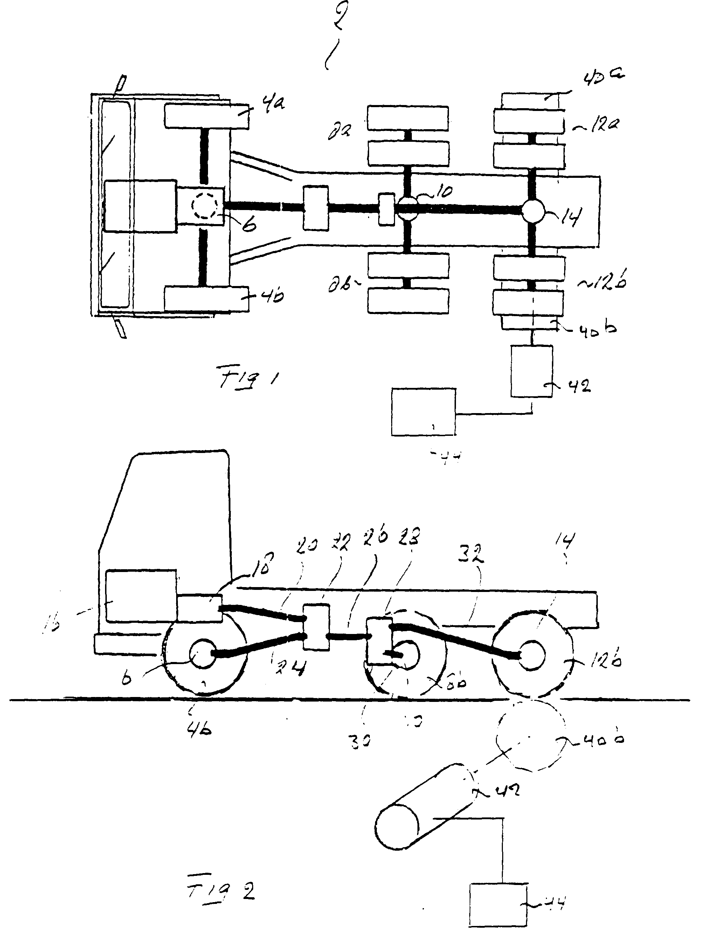

The tractor, indicated in its entirety by reference number 2, has a pair of front wheels with the wheels Figure 2 is a side view thereof.

The tractor, indicated in its entirety by reference number 2, has a pair of front wheels with the wheels 4a, 4b, driven by means of the axle differential 6, and a tandem axle rear set, consisting of the front wheel set 8a, 8b, coupled by means of the first axle differential 10, and the second set 12a, 12b, driven by means of the second axle differential 14. By means of clutch and gearbox 18 and the shaft 20, the engine 16 drives the switch box 22, which can drive the axle differential 6 of the front train by means of the shaft 24, while the interaxle differential 28 is driven by means of the shaft 26 and in turn drives the first axle differential 10 by means of the shaft 30 and the second axle differential 14 by means of the shaft 32. The drive of the axle differential 8 of the front train can be switched on and off by means of the switch box 22.

Both interaxle and axle differential can be locked, the respective differentials normally being locked by means of a single control element (not shown). If a roller test bench with two pairs of rollers disposed at the correct distance apart is available, testing the proper functioning of this locking is no problem, but such a situation will seldom be found at a garage. Only a roller test bench with a single pair of rollers is usually available, and with such a test bench it has not been possible until now to observe whether both the interaxle and the axle differential are in fact locked.

The invention provides a very simple solution to this problem. According to the invention, for this purpose use is made of a roller bench with a single pair of rollers, as known per se, indicated by 40a, 40b, which rollers can rotate independently of each other, and of which the roller 40b is coupled to a drive element 42 which, under the control of a diagrammatically shown control mechanism 44, can exert a preferably adjustable and limited driving couple on the roller 40b coupled thereto, in such a way that this need not necessarily result in the wheels 12b rotating. The wheel sets 4a-4b and 8a-8b in this case rest on the ground 46.

Of course, instead of each of the single rollers 40a, 40b, it is also possible to use a pair of coupled rollers, lying a short distance apart, for supporting the wheels.

When this - limited - couple is now exerted on the wheel set 12b by means of the roller 40b, the way in which the driven wheels 12b and the non-driven wheels 12a react to it is observed.

If both the interaxle differential 28 and the axle differential 14 are locked, neither of the wheels 12a or 12b will rotate. If the driven wheels 12b do rotate, the following are the possibilities:
a) the non-driven wheels 12a do not rotate with the others. This means that neither of the differentials 28, 14 is locked.
b) If the wheels 12a rotate in the same direction as wheels 12b, this means that the axle differential 14 is locked, but the interaxle differential 28 is not.
c) If the non-driven wheel set 12a rotates in the opposite direction to the direction of rotation of the driven wheel set 12b, this means that the interaxle differential 28 is locked, but the axle differential 14 is not.

For testing the axle differential 10 in conjunction with the interaxle differential 28, the wheels 8a-8b are placed on the rollers 40a-40b, and the test is repeated in the above-described way. For testing the axle differential 6 in conjunction with the switch-selected front-wheel drive 22, the wheels 4a-4b are placed on the rollers 40a-40b, and the test is repeated in the above-described way, in which case the switch box 22 being switched on or off is functionally the same as the interaxle differential 28 being locked or unlocked.

As stated above, the drive of the roller 40b must be such that said roller is able to exert a limited and preferably adjustable couple on the wheels supported by it. For this purpose, use can be made of a three-phase motor with voltage or current control, or with frequency control; a three-phase motor with current control or a hydraulic drive with pressure control, or a pneumatic drive with pressure control.

An existing roller test bench which is provided with the usual high-speed drive motors could have a drive which meets the above conditions added to it, and in itself could be a simple type.

## Claims

1. Method for testing the locking of an axle differential (6,10,14) and its nearest interaxle differential (28) or switch box (22) of a multi-axle drive motor vehicle, **characterised in that** the pair of wheels (12a, 12b) of one of the driven axles is made to rest on two independently rotating rollers (40a,40b) of a pair of rollers of a roller test bench, the wheels (4a,4b;8a,8b) of the other axle are made to rest on the ground, a limited driving couple is exerted by means of one (40b) of the rollers of the pair of rollers (40a,40b) on the wheel (12b) supported by said roller (40b), the reaction of this (12b) and the opposite Wheel (12a) in response thereto with the respective lockings switched on and/or off is observed, and the functioning of the respective axle differentials (6, 10, 14), the interaxle differential (12) or the switch box (22) is deduced from the result of this observation.

2. Method according to claim 1, **characterised in that** the following criteria are applied:
driven wheel does not rotate: interaxle (28) and axle differential (10,14) locked;
driven wheel rotates, but the opposite wheel does not: neither of the differentials (14,10) locked;
driven wheel rotates and opposite wheel rotates along with it in the same direction: axle differential locked, but interaxle differential (28) not locked;
driven wheel rotates and opposite wheel rotates in opposite direction: axle differential not locked and interaxle differential (28) locked.

3. Method according to claim 1 or 2, **characterised in that** the couple exerted can be adjusted as desired.

4. Roller test bench for carrying out the method according to one of claims 1 - 3, and provided with a pair independently rotating of rollers, **characterised in that** one (40b) of the rollers of said pair of rollers (40a,40b) can be driven in such a way that, even if the wheel (12b) supported by it cannot rotate continuously, a limited driving couple is exerted on said wheel (12b).

5. Device according to claim 4, **characterised** by means (44) for adjusting the driving couple as desired.

6. Device according to claim 4 or 5, **characterised** by a roller drive by means of a three-phase motor with voltage or current control.

7. Device according to claim 4 or 5, **characterised** by a roller drive by means of a three-phase motor with frequency control.

8. Device according to claim 4 or 5, **characterised** by a roller drive by means of a three-phase motor with current control.

9. Device according to claim 4 or 5, **characterised** by a hydraulic roller drive with control of the hydraulic medium pressure.

10. Device according to claim 5, **characterised** by a pneumatic roller drive with control of the pressure of the pneumatic medium.

## Patentansprüche

1. Verfahren zum Testen des Sperrens eines Achsendifferentials (6,10,14) und dessen nächsten Zwischenachsendifferentials (28) oder Verteilergetriebes (22) eines mehrachsig angetriebenen Motorfahrzeugs,
dadurch gekennzeichnet, daß das Räderpaar (12a,12b) einer der angetriebenen Achsen auf zwei unabhängig umlaufenden Rollen (40a, 40b) eines Rollenpaares einer Rollentestbank zur Auflage gebracht wird, die Räder (4a,4b;8a,8b) der anderen Achsen auf dem Boden zur Auflage gebracht werden, ein begrenztes Antriebsmoment durch eine (40b) der Rollen des Rollenpaares (40a,40b) auf das von besagter Rolle (40b) getragene Rad (12b) ausgeübt wird, die Reaktion dieses (12b) und des entgegengesetzten Rades (12a) hierauf bei eingeschalteten und/oder ausgeschalteten jeweiligen Sperren erfaßt wird und das Funktionieren des jeweiligen Achsendifferentials (6,10,14), des Zwischenachsendifferentials (12) oder des Verteilergetriebes (22) vom Ergebnis dieser Erfassung abgeleitet wird.

2. Vorrichtung nach Anspruch 1, dadurch gekennzeichnet, daß folgende Kriterien zur Anwendung kommen:
Das angetriebene Rad dreht sich nicht: Zwischenachsen (28)- und Achsendifferential (10,14) sind gesperrt;
das angetriebene Rad dreht sich, jedoch dreht sich das entgegengesetzte Rad nicht: Keines der Differentiale (10,14) ist gesperrt;
das angetriebene Rad dreht sich, und das entgegengesetzte Rad dreht sich mit diesem in derselben Richtung: Das Achsendifferential ist gesperrt, jedoch ist das Zwischenachsendifferential (28) nicht gesperrt;
das angetriebene Rad dreht sich, und das entgegengesetzte Rad dreht sich in entgegengesetzter Richtung: Das Achsendifferential ist nicht gesperrt, und das Zwischenachsendifferential (28) ist gesperrt.

3. Verfahren nach Anspruch 1 oder 2, dadurch gekennzeichnet, daß das ausgeübte Moment nach Wunsch eingestellt werden kann.

4. Rollentestbank zum Durchführen des Verfahrens nach einem der Ansprüche 1 bis 3, mit einem Paar von unabhängig drehbaren Rollen, dadurch gekennzeichnet, daß eine (40b) der Rollen des Rollenpaares (40a,40b) derart antreibbar ist, daß selbst dann, wenn das von ihr getragene Rad (12b) nicht kontinuierlich umlaufen kann, ein begrenztes Antriebsmoment auf besagtes Rad (12b) ausgeübt wird.

5. Vorrichtung nach Anspruch 4, gekennzeichnet durch eine Einrichtung (44) zum wunschgemäßen Einstellen des Antriebsmoments.

6. Vorrichtung nach Anspruch 4 oder 5, gekennzeichnet durch einen Drei-Phasen-Motor mit Spannungs- oder Stromsteuerung als Rollenantrieb.

7. Vorrichtung nach Anspruch 4 oder 5, gekennzeichnet durch einen Drei-Phasen-Motor mit Frequenzsteuerung als Rollenantrieb.

8. Vorrichtung nach Anspruch 4 oder 5, gekennzeichnet durch einen Drei-Phasen-Motor mit Stromsteuerung als Rollenantrieb.

9. Vorrichtung nach Anspruch 4 oder 5, gekennzeichnet durch einen hydraulischen Rollenantrieb mit Steuerung des Hydraulikmedium-Druck.

10. Vorrichtung nach Anspruch 5, gekennzeichnet durch einen pneumatischen Rollenantrieb mit Steuerung des Drucks des Pneumatikmediums.

## Revendications

1. Procédé d'essai du blocage d'un différentiel d'essieu (6,10,14) et de son différentiel entre essieux le plus proche (28) ou de la boîte de transfert la plus proche (22) d'un véhicule à moteur à entraînement sur plusieurs essieux, caractérisé en ce qu'on place la paire de roues (12a,12b) d'un des essieux entraînés en appui sur deux rouleaux tournant de façon indépendante (40a,40b) d'une paire de rouleaux d'un banc d'essai à rouleaux, on place les roues (4a,4b;8a,8b) de l'autre essieu en appui sur le sol, on exerce un couple d'entraînement limité au moyen d'un (40b) des rouleaux de la paire de rouleaux (40a,40b) sur la roue (12b) supportée par ledit rouleau (40b), on observe la réaction de cette roue (12b) et de la roue opposée (12a) en réponse à ce couple pendant qu'on commute les dispositifs de blocage respectifs en position active et/ou inactive, et on déduit le fonctionnement des différentiels d'essieu respectifs (6,10,14), du différentiel entre essieux (12) ou de la boîte de transfert (22) du résultat de cette observation.

2. Procédé suivant la revendication 1, caractérisé en ce qu'on applique les critères suivants :
la roue entraînée ne tourne pas : le différentiel entre essieux (28) et le différentiel d'essieu (10, 14) sont bloqués ;
la roue entraînée tourne mais la roue opposée ne tourne pas : aucun des différentiels (14,10) n'est bloqué ;
la roueentraînée tourne et la roue opposée tourne en même temps qu'elle, dans le même sens : le différentiel d'essieu est bloqué mais le différentiel entre essieux (28) n'est pas bloqué ; et
la roue entraînée tourne et la roue opposée tourne en sens inverse : le différentiel d'essieu n'est pas bloqué et le différentiel entre essieux (28) est bloqué.

3. Procédé suivant la revendication 1 ou 2, caractérisé en ce que le couple exercé peut être réglé comme désiré.

4. Banc d'essai à rouleaux pour la mise en oeuvre du procédé suivant une des revendications 1 à 3, et comportant deux rouleaux tournant de façon indépendante, caractérisé en ce qu'un (40b) des rouleaux de ladite paire de rouleaux (40a,40b) peut être entraîné d'une manière telle que, même si la roue (12b) supportée par ledit rouleau ne peut pas tourner continuellement, un couple d'entraînement limité est exercé sur ladite roue (12b).

5. Dispositif suivant la revendication 4, caractérisé par des moyens (44) de réglage du couple d'entraînement comme désiré.

6. Dispositif suivant la revendication 4 ou 5, caractérisé par un entraînement de rouleau au moyen d'un moteur triphasé à réglage par tension ou courant.

7. Dispositif suivant la revendication 4 ou 5, caractérisé par un entraînement de rouleau au moyen d'un moteur triphasé à réglage par fréquence.

8. Dispositif suivant la revendication 4 ou 5, caractérisé par un entraînement de rouleau au moyen d'un moteur triphasé à réglage par courant.

9. Dispositif suivant la revendication 4 ou 5, caractérisé par un entraînement de rouleau hydraulique à réglage de la pression du fluide hydraulique.

10. Dispositif suivant la revendication 5, caractérisé par un entraînement de rouleau pneumatique à réglage de la pression du fluide pneumatique.
